# EUROPEAN PATENT APPLICATION

(11) **EP 2 279 937 A1**
(43) Date of publication of application: **02.02.2011**
(21) Application number: 09170056.7
(22) Date of filing: 11.09.2009
(51) Int. Cl.: B62K 19/18, B62K 19/24, B62K 19/26, B62K 19/32, B62K 19/34, B62K 19/36

(54) **Bicycle frame**

(30) Priority: 31.07.2009 CN 200920061555 U
(71) Applicant: Liu, Yu-Shan, Dongguan City, Guangdong 523000 (CN)
(72) Inventor: Liu, Yu-Shan, Dongguan City, Guangdong 523000 (CN)
(74) Representative: Vandeberg, Marie-Paule L.G.

(57) **Abstract**

A bicycle frame comprises multiple connectors (10, 20, 30, 40, 50) and a plurality of connecting pipes (60). The connectors are connected to each other via connecting pipes (60). Each connector (10, 20, 30, 40, 50) comprises at least one connecting sleeve (12, 22, 32, 42, 52), an end of a connecting pipe (60) being fixed inside the corresponding connecting sleeve (12, 22, 32, 42, 52). The connecting pipe(60) and connecting sleeve are fastened together by clamping devices.

## Description

### Field of the invention

The invention relates to the technical area of bicycles, and more particularly to bicycle frames.

### Description of the prior art

Materials of bicycle frames presently on the market are listed as follows: carbon steels, chromium molybdenum steels, stainless steels, aluminium alloys, titanium alloys, carbon fibre materials, etc. When producing the bicycle frames, one generally produces the connectors and connecting pipes first, and then fixes the connectors and connecting pipes together by welding so that the bicycle support is assembled. The aforementioned bicycle frame has large dimensions and it's hard for operators to weld while producing, which may cause false welding, broken welding, empty welding or sand holes, which will bring potential safety hazard. There is a high possibility that the bicycle frame will break once the stress is too high and the user may get hurt. You have to go on welding connecting pipes and connectors while avoiding the above problems, but it will affect the appearance of the bicycle frame. The bicycle frame produced in this way results in many problems while welding, it may bring potential safety hazard to the bicycle, and thus the time life of the bicycle is shortened. Once the bicycle is out of service, the materials thereof can be recycled, but materials like carbon fibre material is hard to recycled and reused, the only way is to discard it into the nature, which will cause new pollution.

### Summary of the invention

The object of the invention is to overcome the shortcomings existing in prior art by providing a bicycle frame that can withstand strong outside forces and improve the aesthetic and security properties of the bicycle frame.

To achieve the above-mentioned object, the subject of the invention is a bicycle frame which comprises multiple connectors and multiple connecting pipes. The connectors are connected to each others by connecting pipes. Each connector is provided with at least one connecting sleeve. The ends of the connecting pipes are fixed inside the connecting sleeve, the connecting pipe and connecting sleeves being fixed through a clamp device.

The beneficial effects of the present invention are that: There are connecting sleeves shaped on the connector, which are used to affix the end connection of the connecting pipes of adjacent connecting connectors so that the connector and the connecting pipes can form a stable whole. This can effectively improve the non-deformability and security of the bicycle support. The bicycle frame is very convenient to process and install, and that it is beautiful in appearance because there is no welding on it. Meanwhile, the clamp devices keep the connection firmly, which extends the useful time-life of the bicycle frame.

### Brief description of the drawings

Fig.1 is a lateral view of the frame of the invention;
Fig.2 is more detailed view of a clamp device of the frame of the invention;
Fig.3 is a cross-section of the clamp device shown at Fig. 2;
Fig.4 is a detailed lateral view of another embodiment of the clamp device of the invention;
Fig.5 is a section view of the embodiment of Fig.4;
Fig.6 is a detailed cutaway lateral view of still another embodiment of the clamp device of the invention.

### Detailed description of the preferred embodiment

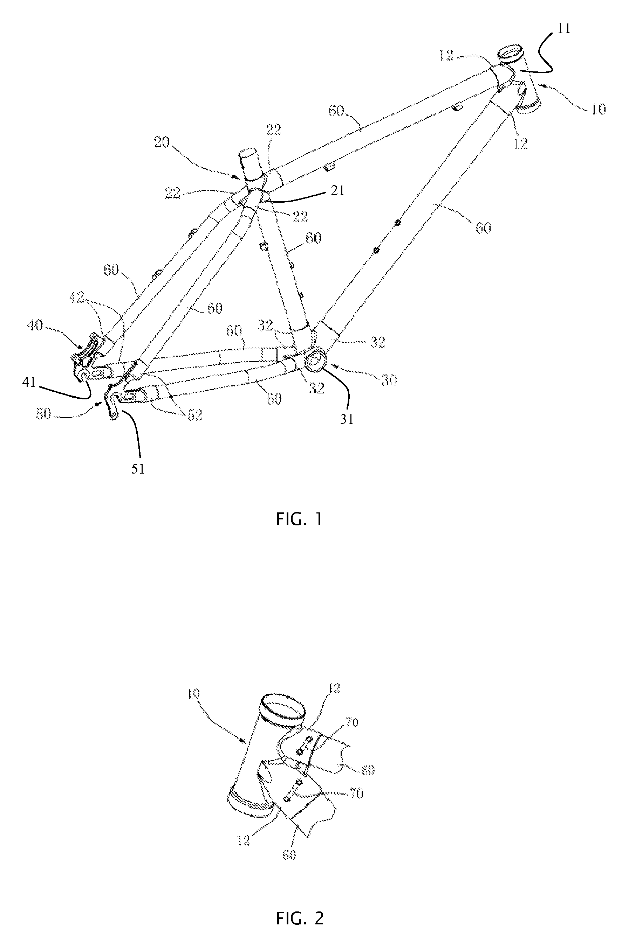

As shown in Fig.1, the frame of the invention comprises a plurality of connectors 10, 20, 30 connecting frame pipes 60. Each connector is provided with at least one connecting sleeve 12, 22, 32. Each end of a given frame pipe 60 is fixed inside the corresponding connecting sleeves 12, 22, 32 of the connectors 10, 20, 30.

For sake of ease, in the description of the various components hereafter, terms as "front", "back", "side" will refer to the corresponding part of a common bicycle.

Amongst the connectors, one may cite a handle connector 10, a seat connector 20, a pedal connector 30, a left wheel connector 40, a right wheel connector 50. Connectors and frame pipes 60 constitute the main parts of the bicycle frame. The man skilled in the art will understand that the shape of handle connector 10, seat connector 20, pedal connector 30, left wheel connector 40, right wheel connector 50 and frame pipe 60 remain by and large the same whatsoever the shape of the frame. The following description will thus not give too much explanation to that respect.

One of said connectors is the handle connector 10, a cross that comprises a front wheel pipe 11 and two connecting sleeves 12. Those connecting sleeves 12 are placed on the same side of the front wheel pipe 11 and arranged one above the other. The handlebar shaft (not shown) is inserted into the front wheel pipe 11.

Another connector is the seat connector 20, a bottom bracket that comprises a seat pipe 21 and three connecting sleeves 22. A connecting sleeve 22 is placed at the front side of the seat pipe 21. The two other connecting sleeves 22 extend on the opposite side of the seat pipe 21. The shaft of the (not represented) bicycle seat is fixed into the main pipe 21. The connecting sleeve 22 that extends at the front side of the seat pipe 21 of the seat connector 20 is thus connected through pipe 60 with the upper connecting sleeve 12 of the handle connector 10.

Another connector is the pedal connector 30, a six-way pipe that bears a pedal shaft pipe 31 and four connecting sleeves 32. The pedal shaft (not represented) is fixed into the shaft pipe 31. One of the connecting sleeves 32 extends on the front side of the pedal shaft pipe 31. Two connecting sleeves 32 extend on the back side of the shaft pipe 31. The fourth connecting sleeve 32 extends upwardly from the middle of the shaft pipe 31. The connecting sleeve 32 of the pedal connector 30 extending from the front side of the shaft pipe 31 is connected to the lower connecting sleeve 12 of the handle connector 10 via a frame pipe 60. The upwardly extending connecting sleeve 32 of the pedal connector 30 is connected to the seat pipe 21 of the seat connector 20 via a frame pipe 60 which extends through the seat pipe 21 of the seat connector 20, and which can thus be used to fix the (not represented) bicycle seat.

Another connector is the left wheel connector 40 that comprises a slot 41 and two connecting sleeves 42. The slot is used to fix the axle of a (not shown) rear wheel. The two connecting sleeves 42 are arranged in V-shape.

Those two connecting sleeves 42 are connected respectively with the corresponding connecting sleeve 22 extending behind the seat pipe 21 of the seat connector 20 and the connecting sleeve 30 extending behind the pedal pipe 31 of the pedal connector 30 via a connecting pipe 60.

Another connector is the right wheel connector 50 which also comprises a slot 51 and two connecting sleeves 52. The slot is used to fix the axle of the (not shown) rear wheel. The two connecting sleeves 52 are arranged in V-shape. Those two connecting sleeves 52 are connected respectively with the corresponding other connecting sleeve 22 extending behind the seat pipe 21 of the seat connector 20 and the other connecting sleeve 30 extending behind the pedal pipe 31 of the pedal connector 30 via a connecting pipe 60.

What needs to be explained is that for assembling the frame of the invention, a first possibility is to use a rapid heating system, as a high frequency apparatus, to heat the connecting sleeves of a connector 10, 20, 30, 40, 50, then to use hydraulic machinery to insert one of the ends of a connecting pipe 60 into the heated connecting sleeve. The connecting sleeve can connects closely with the connecting pipe 60 after cooling because metal expands with heat and contracts with cold.

Connectors are assembled step by step to make up the main part of the bicycle frame via each connection pipes 60. The connecting sleeves of an adjacent connector can be fixed directly by using a connecting pipe 60 so that the connector and the connecting pipe make up a stable whole frame, which can bear strong external forces without becoming deformed. It is safe and beautiful and, what is more, very convenient to build up.

To further strengthen the connection between connectors and connecting pipes 60, connectors and connecting pipe 60 of the invention are fastened together by various clamping devices. The structure of the clamping devices can be of different types. Fig. 2-6 display as an example various possibilities, applied here to the handle connector 10, which can be combined to the frame of the invention.
Fig.2 is an example of a clamping device that can be used for the invention. Through-holes are pierced through the connecting sleeves 12 and the corresponding connecting pipes 60. The connecting sleeves 12 and connecting pipes 60 are then riveted together by a clamping device as a rivet 70.

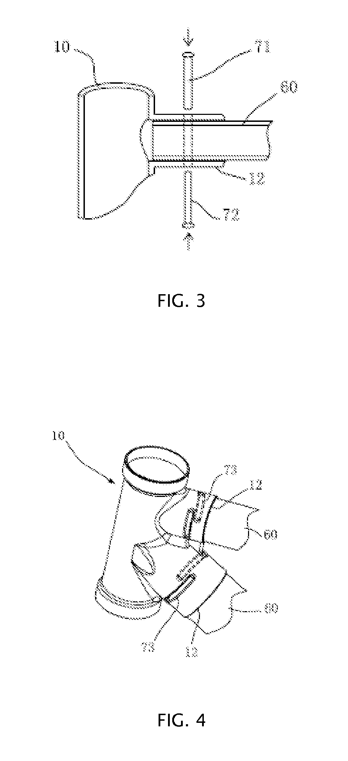

Fig.3 is another example of a clamping device that can be used for the invention. Said clamping device comprises a screw 71 and a combined thread bushing 72. Corresponding through-hole are managed respectively through the connecting sleeve 12 and the connecting pipe 60 for to introduce the screw 71 and the thread bushing 72. the screw 71 extends into the connecting pipe 60 from one side and the thread bushing 72 extends into the connecting pipe 60 from the other side. They are then locked together so that the connection can be strengthened.

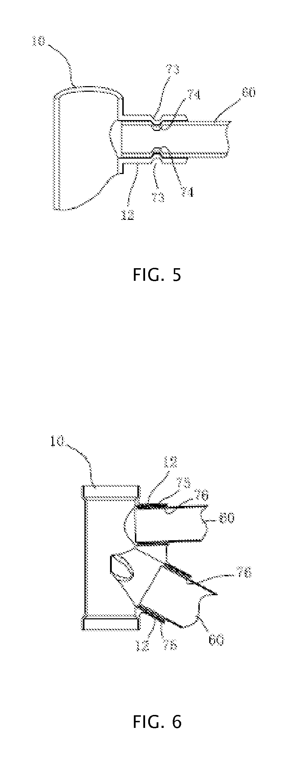

Fig.4 and 5 display another example of clamping device that can be used for the invention. The clamping device here comprises a first socket 73 and a corresponding second socket 74. The first socket 73 is borne by the connecting sleeve 12 and the second socket 74 is borne by the connecting pipe 60. The first socket 73 matches along with the second socket 74.When the connecting sleeve 12 and the connecting pipe 60 are correctly placed, a punching tool is used to punch the connecting sleeve 12 and the connecting pipe 60. Then the first socket and the second socket are formed. What's more, the shape of those two sockets can be bulging or hollow. In these figures the sockets are hollow.
Fig.6 displays another example of clamping device that can be used for the invention. The clamping device here comprises a first thread 75 and a second thread 76. The first thread 75 is shaped on the inner wall of the connecting sleeve 12 and the second thread 76 is shaped on the outer wall of the connecting pipe 60. The first thread 75 matches the second thread 76.

The above description of clamping devices also applies for the other connectors.

The invention is durable, it also has a beautiful appearance and a long useful time.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A bicycle frame comprising multiple connectors (10, 20, 30, 40, 50) and a plurality of connecting pipes (60), connectors being connected to each other via connecting pipes (60) **characterised in that** each connector (10, 20, 30, 40, 50) comprises at least one connecting sleeve (12, 22, 32, 42, 52) an end of a connecting pipe (60) being fixed inside the corresponding connecting sleeve (12, 22, 32, 42, 52), the connecting pipe(60) and connecting sleeve being fixed by a clamping device.

2. A bicycle frame according to claim 1, **characterised in that** it comprises a cross-shaped handle connector (10) comprising a handle pipe and two connecting sleeves (12).

3. A bicycle frame according to either one of claims 1 or 2, **characterised in that** it comprises a seat connector (20) comprising a seat pipe (21) and three connecting sleeves (22), amongst which a connecting sleeve (22) is connectable with a corresponding connecting sleeve (12) of the handle connector (10) via a connecting pipe(60).

4. A bicycle frame according to any one of the preceding claims, **characterised in that** it comprises a six-way pedal connector (30) comprising a pedal pipe (31) and four connecting sleeves (32), amongst which a connecting sleeve (32) is connectable to a connecting sleeve (12) of a handle connector (10) via a connecting pipe (60), another connecting sleeve (32) being connectable to a seat pipe (21) of a seat connector (20) via a connecting pipe (60).

5. A bicycle frame according to any one of the preceding claims, **characterised in that** it comprises a left wheel connector (40) comprising a slot (41) and two connecting sleeves (42), those two connecting sleeves (42) being connectable respectively to a connecting sleeve (22) of a seat connector (20) and to a connecting sleeve (32) of a pedal connector (32) via a connecting pipe (60).

6. A bicycle frame according to any one of the preceding claims, **characterised in that** it comprises a right wheel connector (50) provided with a slot (51) and two connecting sleeves (52), those two connecting sleeves (52) being connectable respectively to a connecting sleeve (22) of a seat connector (20) and to a connecting sleeve (32) of a pedal connector (30) via a connecting pipe (60).

7. A bicycle frame according to any one of the preceding claims, **characterised in that** at least one of the connecting sleeves of at least one of the connectors comprises a through-hole hole matching a through-hole of a connecting pipe (60), said connecting sleeves and connecting pipes (60) being riveted together by a rivet (70).

8. A bicycle frame according to any one of the preceding claims, **characterised in that** at least one of the connecting sleeves of at least one of the connectors comprises a through-hole hole matching a through-hole of a connecting pipe (60), said connecting sleeves and connecting pipes (60) being fastened to each other by a clamping device comprising a screw (71) and a matching thread bushing (72) inserted in said holes.

9. A bicycle frame according to any one of the preceding claims, **characterised in that** at least one of the clamping devices comprises a first socket (73) and a corresponding second socket (74), the first socket (73) being borne by the connecting sleeve (12) and the second socket (74) being borne by a connecting pipe (60), the first socket (73) matching the second socket (74).

10. A bicycle frame according to any one of the preceding claims, **characterised in that** at least one of the clamping devices comprises a first thread (75) placed on the inner wall of a connecting sleeve and a second thread (76) placed on the outer wall of a corresponding connecting pipe (60).
